(19) Europäisches Patentamt
European Patent Office
Office européen des brevets

(11) **EP 3 013 028 A1**

(12) **EUROPEAN PATENT APPLICATION**

(43) Date of publication:
**27.04.2016 Bulletin 2016/17**

(51) Int Cl.:
*H04N 1/40* *(2006.01)*        *H04N 1/401* *(2006.01)*

(21) Application number: **15187998.8**

(22) Date of filing: **01.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.10.2014 EP 14187981**

(71) Applicant: **OCE-Technologies B.V.**
**5914 CA Venlo (NL)**

(72) Inventors:
• **GERRITS, Carolus E.P.**
**5914 CA Venlo (NL)**
• **HUYGHEN, Johannes H.**
**5914 CA Venlo (NL)**

(74) Representative: **Draaisma, Henricus Johannes George**
**OCE-TECHNOLOGIES B.V.**
**PPP Intellectual Property**
**P.O. Box 101**
**5900 MA  Venlo (NL)**

(54) **MULTILEVEL HALFTONING MODULE WITH NON-UNIFORMITY COMPENSATION**

(57)    An image processing module for processing a digital M-level input image into a digital N-level output image is provided, wherein M>N and N>2, a level being indicative of a colorant density in a printing process. The module applies N-1 thresholds for determining an output level for each image element with an input level, wherein thresholds associated with a transition between two output levels are arranged in a threshold matrix, all N-1 threshold matrices being arranged in accordance with a single basic threshold matrix arrangement. The image processing module comprises threshold matrices, wherein the thresholds have been adjusted to compensate printed density variations except the thresholds associated with a transition between a first and a second level, which have not been adjusted in order to keep a number of colorant receiving print positions constant.

Fig. 1

**Description**

BACKGROND OF THE INVENTION

1. Field of the invention

The present invention relates to an image processing module for multilevel halftoning, the module applying thresholds for determining an output level for each image element with an input level, the number of output levels being larger than two and smaller than the number of input levels, a threshold associated with a transition between two output levels being arranged in a threshold matrix and all threshold matrices being arranged in accordance with a single basic threshold matrix arrangement. The invention further relates to a method for obtaining threshold matrices for multilevel halftoning.

2. Description of the Related Art

Many print processes are known that apply binary image data. These image data are characterized by one of two values for every print position. One value indicates that no colorant is to be applied on a specified print position and a second value indicates that a predetermined amount of colorant is to be applied on that print position. In case of an inkjet printing process this involves whether or not an ink drop with a fixed volume is applied on a print position. In case of electro photographic printing it means whether or not a fixed amount of light is applied on a print position, leading to the development of a colorant, either black toner or another selected process colorant, in a fixed quantity.

Images generally comprise colour gradations or tones. After separation into individual process colorants, the different gradations of a colorant may be rendered by generating a dither pattern of the two available values in a binary print process. Optically, the dither pattern has the appearance of the required gradation. The process of converting a multitone image into binary image data is known as halftoning and many different methods for halftoning exist, including thresholding, stochastic dithering, and error diffusion.

Contemporary print processes are often capable to apply several discrete quantities of colorant on a specified print position and therefore apply multilevel image data. These image data are characterized by one of N values for every print position, with N larger than two. Each value corresponds to a different quantity of colorant, thus indicating a density level. A first level corresponds to applying no colorant and the N-th level corresponds to a maximum density for a print position. Still, N is much smaller than the number of levels that is used in a contone image, which is a multitone image in which the number of density levels is so large that a difference between two consecutive levels is not or hardly noticeable. In customary input images the number of levels for each colour channel is 256, corresponding to 8 bits per channel, which is sufficiently high to be considered as contone image.

For these multilevel print processes, an input image having M levels per colour channel is converted to an N-level output image in a multilevel halftoning process. Here, M>N and N>2. Various conversion methods exist, mostly building on the familiar binary halftoning methods. In fact, the quality differences between the various halftoning methods decrease as a result of a decreasing quantization error. However, in contrast to binary halftoning, wherein only the number of print positions with colorant can be varied for a varying density in a dither pattern, in multilevel halftoning there are two ways to increase a density of a dither pattern : one is increasing a number of positions receiving an amount of colorant, a second is increasing an amount of colorant of a position already receiving an amount of colorant. Depending on the physical characteristic properties of a print process, one or the other is preferred. A maximum colorant density is obtained when all print positions have the N-th level, although there may be a limitation to a maximum amount of colorant that is to be applied in the print process.

Besides halftoning, another image data processing step in a print process is a non-uniformity compensation. This step may have a profound impact on the print quality, since density variations occurring in a print process may be compensated both locally and globally. For example, in an inkjet print process, there may be a variation in drop size within a print head, but also a drop size difference between different print heads that are applied in a parallel arrangement, occurs. Both types of non-uniformity may be compensated by measuring a density gradient in a uniform test image and composing a lookup table (LUT) that inverts the density gradient. Although principally this compensation step may be combined with some of the halftoning methods, e.g. by adapting thresholds in a dithering matrix, practically it may be not convenient, due to different constraints in application of memory.

In spite of all available knowledge about halftoning and non-uniformity correction, it is noticed in a multilevel colour print process, that, even if the individual colorants are well compensated for non-uniformity, uniform areas of compound colors still exhibit some non-uniformity. For example, if a light red uniform area is printed using yellow and magenta colorant, a non-uniformity is visible, that is not present in individual yellow or magenta areas. This problem is associated with an interaction between the various colorant quantities. An object of the present invention is to reduce the non-uniformity of compound colors.

SUMMARY OF THE INVENTION

According to the present invention, an image processing module for processing a digital M-level input image into a digital N-level output image, wherein M>N and N>2, a level being indicative of a colorant density in a printing process, a first level corresponding to printing no colorant and further levels corresponding to increasing amounts of colorant on a print position, the module applying N-1 thresholds for determining an output level for each image element with an input level, wherein thresholds associated with a transition between two output levels are arranged in a threshold matrix, all N-1 threshold matrices being arranged in accordance with a single basic threshold matrix arrangement, comprises : a memory for saving the N-1 threshold matrices, an input means for selecting an input image element, a threshold selection means for determining N-1 thresholds associated with the input image element, a halftone processing means for comparing an input image element level to a number of the N-1 thresholds to determine an output image element level, and an output means for outputting an output image element, wherein the thresholds in the threshold matrices have been adjusted to compensate printed density variations except the thresholds associated with a transition between a first and a second level, which have not been adjusted in order to keep a number of colorant receiving print positions constant.

As is well known, a colorant density in a multilevel print process may be varied by either varying the number of positions with an amount colorant or the amount of colorant itself. In a binary print process, only the first possibility is available. For example, in an inkjet print process, the number of ink dots is the only way to obtain a larger ink density. In a multilevel print process, the halftoning method is configured to produce an optimal way to increase the colorant density, which depends on the existing colorant density and its corresponding dither pattern. Thus, starting from the lowest density, the multilevel halftoning yields patterns with a number of print positions with a smallest colorant quantity and with increasing input levels, patterns wherein several levels of colorant quantities are applied for different print positions. It is a well established experience, that patterns wherein all print positions have a same output level are usually not preferred. In the present invention, the dither patterns result from the selection of thresholds and their arrangement in matrices that are applied repetitively over an input image to be processed. A non-uniformity compensation module, that is customarily applied in an image processing data path, affects the input levels to a halftoning module in order to compensate density deviations in the print process. However, these affected input levels may cause the number of print positions to increase. This affects the interaction between colorant quantities in compound colors. In binary print processes, this can not be helped, but in multilevel print processes this can be prevented by arranging the thresholds in the halftoning module as indicated above and in the first claim. Thus, only colorant quantity increments are obtained, leaving the number of print positions unchanged and no varying interactions as a result of non-uniformity compensation.

In a further embodiment, all N-1 threshold matrices have an equal maximum threshold. A maximum threshold determines which input level is the last one converted to a higher corresponding output level. Necessarily, a maximum threshold P for a transition between output level P and output level P+1 is larger than a maximum threshold P-1. A first threshold determines if a new print position is addressed for application with a minimum amount of colorant. A minimum first threshold is commonly one input level above a minimum input level. A range of first thresholds extends from a minimum first threshold to a maximum first threshold. It has been found advantageous for the uniformity to have the range of first thresholds extending over the full range of input levels. This results in an equal maximum threshold for all N-1 threshold matrices.

In another embodiment, the present invention is embodied in a method for obtaining threshold matrices for multilevel halftoning, in which a digital M-level input image is processed into a digital N-level output image, wherein M>N and N>2, a level being indicative of a colorant density in a printing process, a first level corresponding to printing no colorant and further levels corresponding to different amounts of colorant on a print position, the method comprising the steps of a) establishing a basic threshold matrix, wherein a number of thresholds are arranged, thereby ordering available print positions, b) establishing a range of thresholds for a transition between two output levels, c) determining a matrix of thresholds in the established range, in accordance with the basic threshold matrix, d) printing a density profile across a width of a printing process, e) adjusting a minimum of said range of thresholds to compensate a variation in said density profile except for the thresholds associated with a transition between a first and a second level in order to keep a number of colorant receiving print positions constant, and f) determining an adjusted threshold matrix based upon an adjusted range of thresholds.

The present invention may also be embodied in a computer program product, including computer readable code embodied on a non-transitory computer readable medium, said computer readable code comprising instructions for executing the steps of the invented method.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figure 1 is a flow diagram for a multilevel halftoning method;
Figure 2 is a basic threshold matrix arrangement for 64 levels; and
Figure 3 is an image processing pipeline for printing images in a multilevel printer.

DETAILED DESCRIPTION OF EMBODIMENTS

The present invention will now be described with reference to the accompanying drawings, wherein the same or similar elements are identified with the same reference numeral.

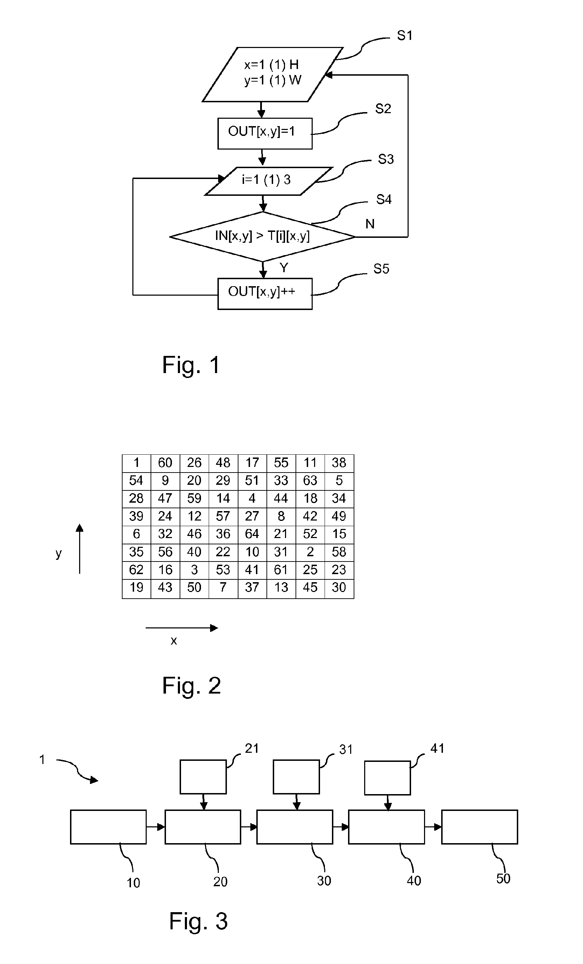

In an inkjet print process, four process colorants are used to print color images on a receiving medium, such as paper. A pixel receives either a single, a double or a triple drop of ink, or no ink at all. Thus, for each colorant there are four levels, N = 4. In order to make an input image, having M = 256 levels for each color channel, printable, a multilevel halftoning method as presented in Fig. 1 is applied. The values IN[x,y] for a pixel in a color channel of an input image are processed to values OUT[x,y] in a color channel of an output image. The variables x and y indicate a position of a pixel in the image of dimensions H times W. The range of values IN[x,y] is 1 to 256, the range of values OUT[x,y] is 1 to 4. A full image comprises four color channels, one for each process colorant, which are processed independently in this multilevel halftoning module.

Step S1 in Fig. 1 starts a loop for processing each pixel and step S2 sets the output value of the corresponding pixel to the first level, indicating that no drop will be applied for this pixel, as a start value. In step S3, a loop is started for determining which of the four output levels is appropriate. For each pixel three threshold values T[i] are defined to distinguish the input levels that are associated with a particular output level. In step S4, a comparison is made between an input level and a threshold T[i][x,y]. If the input value IN[x,y] is the larger one (branch Y), the output level OUT[x,y] is raised by one level in step S5 and a next threshold is scheduled for comparison. If the input value is not the larger one (branch N), a next pixel is selected in step S1.

The thresholds T[i][x,y], i=1 to 3, are determined in accordance with a basic threshold matrix arrangement B[x, y]. Fig. 2 shows a possible arrangement for 8 times 8 entries, but in a similar way BW times BH entries may be applied. For a complete image a matrix is applied periodically, by taking B[x+u*BH,y+v*BW] = B[x,y] for any combination of integers u,v. The entries in B[x,y] indicate the order wherein pixels are addressed to obtain a higher ink density. The array of thresholds is derived with:

$$T[i][x,y] = \frac{B[x,y]-1}{BW*BH-1} * (TX[i] - TN[i]) + TN[i] \, , \tag{1}$$

wherein TX[i] is a maximum threshold and TN[i] is a minimum threshold for a transition between output level i and i+1. Without loss of generality, TN[1]=1 and TX[N-1]=M-1, which is in this embodiment TX[3]=255. Further maximum and minimum thresholds define a range of input values that may be mapped to a specific output value, depending on the position of a pixel.

Without experience with practical print processes, one might be tempted to use:

$$TX[i] = TN[i+1] = \frac{M}{N-1} \, i \tag{2}$$

for i = 1, .. , N-2. However, it is common knowledge that in most print processes, the use of these ranges leads to print quality flaws due to homogeneous areas wherein only one output level is applied. Although a correct colorant density is obtained, these areas deviate too much from areas, wherein more than one output level is applied. Thus, it is usual to have some range overlap, between the various ranges of thresholds. This is obtained by:

$$TN[i] = \frac{M}{N-1}(i-1) - \Delta \, , \quad i = 2, .. , N-1 \tag{3a}$$

$$TX[i] = \frac{M}{N-1} i + \Delta \, , \qquad i = 1, \, .. \, , N-2 \qquad\qquad (3b)$$

wherein $\Delta$, which is a positive number, indicates an amount of overlap between the ranges. It may be selected in dependence of i.

In a present print process, several print heads, each having an array of print elements, are positioned in line, obtaining a page wide array of print elements. There exist variations in amount of colorant, or ink drop size between individual print elements and between individual print heads, which results in a density variation D[y,d], wherein y indicates a position along the page wide array (in pixels) and d indicates an input level of pixels in a homogeneous image area. This density variation may be compensated by an inverse conversion of the colorant level in an input image. However, it has been observed that, even when single colorant areas are compensated well, a non-uniformity remains in compound color areas. In the present embodiment, this non-uniformity is reduced by including a compensation in the ranges of D'[y,i], such that

$$TN[i] = \frac{M}{N-1}(i-1) - \Delta + D'[y,i] \, , \quad i = 2, \, .. \, , N-1 \qquad\qquad (4a)$$

$$TX[i] = \frac{M}{N-1} i + \Delta + D'[y,i] \, , \qquad i = 1, \, .. \, , N-2 \qquad\qquad (4b)$$

wherein D'[y,i] is positive if the colorant density D[y,p] is larger than an average density, averaging over the length of the page wide array and D'[y,i] is negative if D[y,p] is smaller than this average density. However, it is essential to have D'[y,1] = 0, in order to not affect the threshold range of the smallest ink drop.

Fig. 3 shows an image processing pipeline 1, comprising a module 10 for introducing an image in the pipeline. A further module 20 converts the image into a raster image having pixels that comprise a color density for each process color of a print engine. Very often there are four process color channels for a cyan, magenta, yellow and black colorant, but other colorants are very well possible. Module 21 is a memory with data, such as color profiles, that are used in module 20 for generating the raster image. The raster image is passed to module 30 for non-uniformity compensation, wherein non-uniformity tables 31 are accessed, comprising a table of the relation D[y,d] for each channel. These tables are applied to invert an input signal in such a way that a uniform density is printed. Module 40 is a multilevel halftoning module wherein each color channel is processed independently, using threshold matrices as stored in memory 41. These threshold matrices are adjusted using a relation D'[y,i] that compensates most of the non-uniformity, such that the tables 31 are almost redundant. At the end of the image processing pipeline 1, a module 50 is present for saving the processed print signals and sending the print signals to the print process.

An especially well working range of thresholds is obtained when TX[i] = 255 is selected for all values of i, whereas TN[i] is varied as in the previous embodiment. In this case, a number of different droplet sizes in a homogeneous image area is maximum, which apparently benefits a uniform rendering.

In general, a threshold range is adjusted to the individual amount of colorant, or ink drop size, an output level is associated with. Thus, if the amounts of colorant are not a linear function of a level number, the threshold range for a multilevel halftoning matrix may be expressed as :

$$TN[i] = C[i-1] - \Delta[i] + D'[y,i] \, , \quad i = 2, \, .. \, , N-1 \qquad\qquad (5a)$$

$$TX[i] = C[i] + \Delta[i] + D'[y,i] \, , \qquad i = 1, \, .. \, , N-2 \qquad\qquad (5b)$$

$$TN[1] = 1, \; TX[N-1] = 255, \; D'[y,1] = 0 \qquad\qquad (5c)$$

wherein C[i] is high if an amount of colorant is large and C[i] is low if it is small.

The invention being thus described, it will be obvious that the same may be varied in many ways. Such variations are not to be regarded as a departure from the invention, and all such modifications as would be obvious to one skilled in the art are intended to be included within the scope of the following claims.

**Claims**

1. An image processing module for processing a digital M-level input image into a digital N-level output image, wherein M>N and N>2, a level being indicative of a colorant amount in a printing process, a first level corresponding to printing no colorant, a second level corresponding to a minimum amount of colorant and further levels corresponding to increasing amounts of colorant on a print position, the module applying N-1 thresholds for each print position for determining an output level for each image element with an input level, wherein thresholds associated with a transition between two output levels are arranged in a threshold matrix, all N-1 threshold matrices being arranged in accordance with a single basic threshold matrix arrangement, the image processing module comprising :

   a memory for saving the N-1 threshold matrices ;
   an input means for selecting an input image element;
   a threshold selection means for determining N-1 thresholds associated with the input image element;
   a halftone processing means for comparing an input image element level to a number of the N-1 thresholds to determine an output image element level ; and
   an output means for outputting an output image element,
   wherein the thresholds in the threshold matrices have been adjusted to compensate printed density variations except the thresholds associated with a transition between the first and the second level, which have not been adjusted in order to keep a number of colorant receiving print positions constant.

2. The image processing module according to claim 1, wherein all N-1 threshold matrices have an equal maximum threshold.

3. A method for obtaining threshold matrices for multilevel halftoning, in which a digital M-level input image is processed into a digital N-level output image, wherein M>N and N>2, a level being indicative of a colorant density in a printing process, a first level corresponding to printing no colorant, a second level corresponding to a minimum amount of colorant and further levels corresponding to different amounts of colorant on a print position, wherein for each print position N-1 thresholds are applied for determining an output level for each image element with an input level, the method comprising the steps of :

   a) establishing a basic threshold matrix, wherein a number of thresholds are arranged, thereby ordering available print positions ;
   b) establishing a range of thresholds, wherein a threshold is applied for a transition between two output levels ;
   c) determining a matrix of thresholds in the established range, in accordance with the basic threshold matrix ;
   d) printing a density profile across a width of a printing process ;
   e) adjusting a minimum of said range of thresholds to compensate a variation in said density profile except for the thresholds associated with a transition between the first and the second level in order to keep a number of colorant receiving print positions constant;
   f) determining an adjusted threshold matrix based upon an adjusted range of thresholds.

4. The method for obtaining threshold matrices for multilevel halftoning according to claim 3, wherein a maximum of said range of thresholds is equal for all N-1 threshold matrices.

x=1 (1) H
y=1 (1) W — S1

OUT[x,y]=1 — S2

i=1 (1) 3 — S3

IN[x,y] > T[i][x,y] — S4    N

Y

OUT[x,y]++ — S5

# Fig. 1

| 1 | 60 | 26 | 48 | 17 | 55 | 11 | 38 |
|----|----|----|----|----|----|----|----|
| 54 | 9 | 20 | 29 | 51 | 33 | 63 | 5 |
| 28 | 47 | 59 | 14 | 4 | 44 | 18 | 34 |
| 39 | 24 | 12 | 57 | 27 | 8 | 42 | 49 |
| 6 | 32 | 46 | 36 | 64 | 21 | 52 | 15 |
| 35 | 56 | 40 | 22 | 10 | 31 | 2 | 58 |
| 62 | 16 | 3 | 53 | 41 | 61 | 25 | 23 |
| 19 | 43 | 50 | 7 | 37 | 13 | 45 | 30 |

y

x

# Fig. 2

1

21   31   41

10   20   30   40   50

# Fig. 3

Europäisches
Patentamt

European
Patent Office

Office européen
des brevets

# EUROPEAN SEARCH REPORT

Application Number

EP 15 18 7998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 814 302 A2 (DAINIPPON SCREEN MFG [JP]) 1 August 2007 (2007-08-01) * paragraphs [0015] - [0059] * | 1-4 | INV. H04N1/40 H04N1/401 |
| A | EP 0 889 639 A1 (XEROX CORP [US]) 7 January 1999 (1999-01-07) * page 3, line 51 - page 5, line 41 * | 1-4 | |
| A | US 5 689 586 A (LIN QIAN [US]) 18 November 1997 (1997-11-18) * column 3, line 11 - column 4, line 36 * | 1-4 | |
| A | US 5 777 641 A (SUZUKI AKIO [JP] ET AL) 7 July 1998 (1998-07-07) * the whole document * | 1-4 | |

TECHNICAL FIELDS
SEARCHED        (IPC)

H04N

The present search report has been drawn up for all claims

| Place of search | Date of completion of the search | Examiner |
|---|---|---|
| The Hague | 5 February 2016 | Hardell, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
### ON EUROPEAN PATENT APPLICATION NO.

EP 15 18 7998

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2016

| Patent document cited in search report | | Publication date | Patent family member(s) | | Publication date |
|---|---|---|---|---|---|
| EP 1814302 | A2 | 01-08-2007 | EP | 1814302 A2 | 01-08-2007 |
| | | | JP | 4828241 B2 | 30-11-2011 |
| | | | JP | 2007196472 A | 09-08-2007 |
| | | | US | 2007171247 A1 | 26-07-2007 |
| EP 0889639 | A1 | 07-01-1999 | DE | 69819608 D1 | 18-12-2003 |
| | | | DE | 69819608 T2 | 13-05-2004 |
| | | | EP | 0889639 A1 | 07-01-1999 |
| | | | JP | H1141465 A | 12-02-1999 |
| | | | US | 6014226 A | 11-01-2000 |
| US 5689586 | A | 18-11-1997 | CN | 1118898 A | 20-03-1996 |
| | | | DE | 69520703 D1 | 23-05-2001 |
| | | | DE | 69520703 T2 | 02-08-2001 |
| | | | EP | 0670654 A1 | 06-09-1995 |
| | | | JP | H07283942 A | 27-10-1995 |
| | | | US | 5689586 A | 18-11-1997 |
| US 5777641 | A | 07-07-1998 | JP | 2859759 B2 | 24-02-1999 |
| | | | JP | H0532023 A | 09-02-1993 |
| | | | US | 5777641 A | 07-07-1998 |

EPO FORM P0459

For more details about this annex : see Official Journal of the European Patent Office, No. 12/82